# EUROPÄISCHE PATENTSCHRIFT

(11) **EP 3 610 148 B1**
(45) Veröffentlichungstag und Bekanntmachung des Hinweises auf die Patenterteilung: **02.03.2022**
(21) Anmeldenummer: 18717306.7
(22) Anmeldetag: 06.04.2018
(51) Int. Cl.: F02D 41/02, F01N 3/08, F02D 41/06, F02D 41/14

(54) **VERFAHREN ZUR INBETRIEBNAHME EINES VERBRENNUNGSMOTORS UND KRAFTFAHRZEUG MIT EINEM VERBRENNUNGSMOTOR**
METHOD FOR COMMISSIONING AN INTERNAL COMBUSTION ENGINE, AND MOTOR VEHICLE COMPRISING AN INTERNAL COMBUSTION ENGINE
PROCÉDÉ POUR FAIRE FONCTIONNER UN MOTEUR À COMBUSTION INTERNE ET VÉHICULE AUTOMOBILE ÉQUIPÉ D'UN MOTEUR À COMBUSTION INTERNE

(30) Priorität: 10.04.2017 DE 102017107678
(43) Veröffentlichungstag der Anmeldung: 19.02.2020
(73) Patentinhaber: Volkswagen AG, 38440 Wolfsburg (DE)
(72) Erfinder: PAUKNER, Stefan, 38442 Wolfsburg (DE); BARON VON CEUMERN-LINDENSTJERNA, Falk-Christian, 38124 Braunschweig (DE); MANZ, Michael, 30855 Langenhagen (DE)
(74) Vertreter: Gulde & Partner
(86) Internationale Anmeldenummer: PCT/EP2018/058838
(87) Internationale Veröffentlichungsnummer: WO 2018/189047

(56) Entgegenhaltungen:
- EP-A2- 1 182 340
- WO-A1-2017/144222
- DE-A1- 4 331 853
- DE-A1-102012 205 017
- DE-A1-102013 221 595
- DE-C1- 4 223 954
- FR-A1- 2 822 900
- US-A1- 2003 070 423
- US-A1- 2004 182 069
- US-A1- 2008 282 673
- US-A1- 2009 114 188
- US-A1- 2009 301 437
- US-A1- 2016 115 880

## Beschreibung

Die Erfindung betrifft ein Verfahren zur Inbetriebnahme eines Verbrennungsmotors, insbesondere ein Verfahren zum Verbessern eines Kaltstartabgasverhaltens bei der Inbetriebnahme des Verbrennungsmotors. Die Erfindung betrifft ferner ein Kraftfahrzeug mit einem Verbrennungsmotor und bevorzugt mit einem zur Durchführung des erfindungsgemäßen Verfahrens zur Inbetriebnahme des Verbrennungsmotors eingerichtetem Steuergerät.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung erfüllt werden müssen. Insbesondere mit Einführung der Gesetzgebungsstufe EU6 sind die Emissionsgrenzwerte für Fahrzeuge mit Ottomotor nochmals massiv verschärft worden. Zudem wird die RDE-Gesetzgebung eine höhere Dynamik direkt nach dem Motorstart berücksichtigen, weswegen es zunehmend entscheidend ist, minimale Abgasemissionen auch direkt nach dem Motorstart sicherzustellen.

Für die Abgaszusammensetzung eines Ottomotors ist neben Faktoren wie Zündwinkel und eingesetztem Kraftstoff insbesondere das Verbrennungsluftverhältnis wesentlich, also das Masseverhältnis aus Luft und Brennstoff im Motorbrennraum. Dieses Verhältnis wird in der Regel als dimensionslose Kennzahl λ angegeben, welche den Quotienten aus der tatsächlich im Brennraum zur Verfügung stehende Luftmasse und der für eine vollständige Verbrennung zumindest notwendigen Luftmasse bezeichnet. Für λ=1 spricht man von einem stöchiometrischen Betrieb, bei dem so viel Luftmasse im Brennraum zur Verfügung steht, wie theoretisch für eine vollständige Umsetzung des eingespritzten Kraftstoffs notwendig ist. Bei einem λ<1 herrscht Luftmangel im Verbrennungsraum und man spricht man von einem fetten Gemisch. Bei λ>1 herrscht Luftüberschuss im Verbrennungsraum und man spricht von magerem Gemisch.

Um nicht vollständig vermeidbare Rohemissionen effektiv nachmotorisch umsetzen zu können, werden in der Abgasanlage von Verbrennungsmotoren mit Edelmetallen beschichtete Katalysatoren verbaut. Im normalen Motorbetrieb zeigen derartige Katalysatoren im sogenannten Lambda-Fenster mit einem λ zwischen 0,97 und 1,03 beste Wirkungsgrade, das heißt beste Reinigungsleistungen durch effiziente Abgaskonvertierungen. Darüber hinaus benötigen die Katalysatoren ein minimales Abgas-Temperaturniveau, um die darin enthaltenen Schadstoffe umsetzen zu können. Es ist bekannt, zum Beheizen der Katalysatoren elektrische Heizelemente oder innermotorischen Maßnahmen einzusetzen. Dabei sind innermotorische Heizmaßnahmen in der Regel mit dem Einstellen eines bestimmten

Verbrennungsluftverhältnisses, das heißt eines bestimmten Solllambdas, verbunden.

Bei allen bekannten Verfahren zur Inbetriebnahme eines Verbrennungsmotors wird der Solllambdawert vorgesteuert, da eine zum Bestimmen des Lambdawerts im Abgaskanal angeordnete Lambdasonde in der Regel beim Motorstart noch nicht betriebsbereit ist. Bei einer Vorsteuerung liegt der tatsächliche, gemessene Lambdawert in der Regel um ein bis zwei Prozent neben dem Sollwert. Dies liegt beispielsweise daran, dass das Modell für die Vorsteuerung nicht alle Einflüsse auf den Verbrennungsmotor präzise berücksichtigen kann.

In den Dokumenten DE4223954, DE102012205017 und DE4331853, wird ein Vorheizen des Abgassensors offenbart, sodass der Sensor beim Motorstart betriebsbereit ist.

Dokumente US2004/0182069, DE102013221595 und US2009/0301437 offenbaren Startverfahren mit Kontrolle des Lambdawerts.

In bekannten Verfahren führt ein undefiniertes Temperaturniveau der Lambdasonde beim Motorstart somit nicht nur zu erhöhten Rohemissionen sondern auch zur verminderten Wirksamkeit innermotorischer Maßnahmen zum Aufheizen des Katalysators. Der vorliegenden Erfindung liegt daher die Aufgabe zugrunde, ein Verfahren zur Inbetriebnahme eines Verbrennungsmotors bereitzustellen, dass die Nachteiles des Standes der Technik mindert oder überwindet und die Abgasqualität unmittelbar nach dem Motorstart verbessert.

Diese Aufgabe wird gelöst durch ein erfindungsgemäßes Verfahren zur Inbetriebnahme eines Verbrennungsmotors, wobei der Verbrennungsmotor ein daran angeschlossenes Abgassystem aufweist und mit einem Steuergerät verbunden ist. In dem Abgassystem sind eine elektrisch beheizbare Lambdasonde und ein Katalysator angeordnet, wobei der Katalysator einen Sauerstoffspeicher (*Oxygen Storage Capacity-* OSC) aufweist. Der Sauerstoffspeicher enthält bevorzugt zumindest eine Cerdioxid und/oder Zirkonoxid aufweisende Keramikomponente. Dem Fachmann sind geeignete Katalysatoren mit Sauerstoffspeichern bekannt.

In einem ersten Schritt des erfindungsgemäßen Verfahrens erfolgt ein elektrisches Aufheizen der Lambdasonde während einer ersten Phase bereits vor dem Start des Verbrennungsmotors, also bei ausgeschaltetem Verbrennungsmotor, in Reaktion auf den Empfang eines ersten Steuersignals durch das Steuergerät. Bevorzugt ist ein elektrisches Heizelement an oder in der Lambdasonde angeordnet und mittels des Steuergeräts betreibbar. Erst sobald eine Betriebstemperatur der Lambdasonde erreicht ist, wird der Verbrennungsmotor in einem zweiten Schritt des erfindungsgemäßen Verfahrens gestartet. Somit ist bereits beim Start des Verbrennungsmotors die volle Regelbereitschaft der Lambdasonde gegeben und eine Vorsteuerung des Kraftstoffluftgemischs kann vorteilhat entfallen.

Aufbauend auf der bereits beim Motorstart zur Verfügung stehenden Regelbereitschaft der Lambdasonde wird der Verbrennungsmotor unmittelbar nach dem Start in einem präzise Lambda-geregelten Magerbetrieb betrieben. Beim Motorstart ist davon auszugehen, dass sich der im Abgassystem angeordnete Katalysator noch unterhalb seiner Light-Off-Temperatur befindet und daher noch nicht voll betriebsfähig, das heißt zur Konvertierung von Rohemissionen noch nicht voll in der Lage ist. Der präzise einstellbare Magerbetrieb des Verbrennungsmotors reduziert insbesondere die HC- und CO-Rohemissionen, während eine signifikante Erhöhung der NOₓ-Rohemissionen nicht erfolgt. Es hat sich gezeigt, dass eine optimale Abgasqualität im Magerbetrieb des gestarteten Verbrennungsmotors mit einem Solllambda zwischen 1,05 und 1,15, besonders bevorzugt von etwa 1,1, erzielt wird

In einem dritten Schritt des erfindungsgemäßen Verfahrens erfolgt ein präzise Lambda-geregelter stöchiometrischer Betrieb des Verbrennungsmotors, nachdem eine erste Betriebstemperatur des Katalysators erreicht ist. Die erste Betriebstemperatur des Katalysators ist dabei bevorzugt die Light-Off-Temperatur des Katalysators, ab der das volle Konvertierungspotential des Katalysators ausgeschöpft werden kann. Die Regelung des stöchiometrischen Betriebs des Verbrennungsmotors erfolgt dabei bevorzugt stetig, das heißt der Verbrennungsmotor wird so betrieben, dass ein zeitlich konstanter Ziellambdawert mit der im Abgaskanal angeordneten Lambdasonde ermittelt wird.

In einem vierten Schritt des erfindungsgemäßen Verfahrens erfolgt ein präzise Lambda-geregelter stöchiometrischer Betrieb des Verbrennungsmotors mit oszillierendem Solllambdawert, nachdem eine zweite Betriebstemperatur des Katalysators erreicht ist. Bei der zweiten Betriebstemperatur des Katalysators handelt es sich bevorzugt um eine Aktivierungstemperatur T₃ des in dem Katalysator angeordneten Sauerstoffspeichers. Dieser ist oberhalb der Aktivierungstemperatur in der Lage, dynamisch Sauerstoff in sein Gefüge ein- und auszubauen. Bei überschrittener Aktivierungstemperatur des Sauerstoffspeichers wird das beste Abgaskonvertierungsergebnis am Katalysator mit oszillierend geregeltem Solllambdawert erreicht. Dabei wird ein Solllambda von 1,0 mit einer Zwangsamplitude von beispielsweise +/-10%, bevorzugt +/- 5% und besonders bevorzugt +/- 2% beaufschlagt. Somit kann der Solllambdawert nach dem Erreichen der zweiten Betriebstemperatur beispielsweise zwischen 0,98 und 1,02 alternieren.

Es hat sich gezeigt, dass die Kombination der Schritte des erfindungsgemäßen Verfahrens eine deutliche Reduzierung schädlicher HC-, CO- und NOX Rohemissionen direkt nach dem Start des Verbrennungsmotors sowie ein besonders schnelles Erreichen einer hohen Konvertierungsrate am nachgelagerten Katalysator ermöglicht. In einer bevorzugten Ausgestaltung des erfindungsgemäßen Verfahrens werden diese positiven Effekte noch verstärkt, indem der Verbrennungsmotor bis zum Erreichen der ersten Betriebstemperatur des Katalysators mit erhöhter Zündenergie im Magerbetrieb betrieben wird. Die erhöhte Zündenergie wird bevorzugt durch Funkenbandzündungen als bedarfsgerechte Mehrfachzündungen bereitgestellt und erhöht die Laufruhe des Verbrennungsmotors sowie die zeitliche Homogenität der Verbrennungsabgase. Somit werden die Rohgasemissionen weiter reduziert und die Abgaskonvertierung im Katalysator kann besonders regelmäßig erfolgen.

Im erfindungsgemäßen Verfahren kommt bevorzugt ein keramisches Sensorelement als Lambdasonde, insbesondere als Sprungsonde oder als Breitbandsonde, zum Einsatz. Die Lambdasonde enthält bevorzugt einen Festkörperelektrolyten, der im Abgasstrom des Verbrennungsmotors angeordnet ist und in Abhängigkeit einer Sauerstoffpartialdruckdifferenz zwischen dem Abgas und einem Referenzgas ein Spannungssignal ausgibt. Bevorzugt basiert der Festkörperelektrolyt auf Zirkoniumdioxid. Ebenfalls bevorzugt wird eine wasserschlagsfeste Lambdasonde verwendet. Die Wasserschlagsfestigkeit kann durch die Anordnung der Lambdasonde im Abgaskanal, beispielsweise in einem abfallenden Abgasrohrstück, durch geeignetes Ausrichten einer Messöffnung der Lambdasonde, beispielsweise entgegen dem Abgasstrom, und/oder durch eine poröse keramische Schutzschicht auf der Sondenoberfläche erreicht werden. Dem Fachmann ist bekannt, wie die Wasserschlagsfestigkeit von Lambdasonden gewährleistet werden kann. Die im erfindungsgemäßen Verfahren zum Einsatz kommende Lambdasonden weist bevorzugt ein Widerstandsheizelement auf.

In einer ferner bevorzugten Ausführungsform des erfindungsgemäßen Verfahrens weist der im Abgassystem des Verbrennungsmotors angeordnete Katalysator ein elektrisches Heizelement auf und wird ebenfalls elektrisch aufgeheizt, sobald das Steuergerät das erste Steuersignal empfangen hat. Somit kann der Katalysator schon vor dem Start des Verbrennungsmotors auf eine Temperatur aufgeheizt werden, bei der bereits eine teilweise Konvertierung von Schadstoffen durch den Katalysator erfolgt. Ebenfalls bevorzugt erreicht der Katalysator durch das elektrische Beheizen vor dem Motorstart zumindest eine Schwellentemperatur, ab der zumindest 15%, ferner bevorzugt zumindest 25% und besonders bevorzugt zumindest 35% der in den Katalysator eintretenden Abgasbestandteile konvertiert werden. In einer alternativen Ausführungsform des erfindungsgemäßen Verfahrens erfolgt das Aufheizen des Katalysators lediglich durch Wärmeübergang vom Abgas auf den Katalysator.

Im erfindungsgemäßen Verfahren dienen eine erste und eine zweite Betriebstemperatur des Katalysators als Auslöseereignisse, um den Betrieb des gestarteten Verbrennungsmotors schrittweise anzupassen. Die Betriebstemperaturen werden dabei bevorzugt mittels eines an oder in dem elektrisch beheizbaren Katalysator angeordneten Temperatursensors erfasst. Alternativ kann auf einen Temperatursensor verzichtet und können die erste und zweite Betriebstemperatur anhand eines Abgastemperaturmodells ermittelt werden. Ein solches Abgastemperaturmodell ist beispielsweise in DE 10 2013 216 024 A1 beschrieben und beruht regelmäßig auf einem im Abgasstrom gemessenen Ist-Lambdawert. Im erfindungsgemäßen Verfahren liegt die Regelbereitschaft der Lambdasonde, das heißt deren Messbereitschaft, bereits beim Motorstart vor. Somit können anhand des Abgastemperaturmodells bereits direkt nach dem Motorstart verlässliche Aussagen zur Abgastemperatur getroffen werden.

Als auslösendes Ereignis für das Beheizen der Lambdasonde dient im erfindungsgemäßen Verfahren der Empfang des ersten Steuersignals durch das Steuergerät. Bevorzugt handelt es sich bei dem ersten Steuersignal um ein von einem Türkontaktschalter, von einem Empfänger für ein schlüsselloses Schließsystem, von einem Empfänger für eine Zentralverriegelung oder von einem Gurtschlosskontakt an das Steuergerät übermitteltes erstes Steuersignal. Üblicherweise steigt der Fahrer kurz vor dem Kaltstart eines Fahrzeugs in dieses ein und schnallt sich an. Durch einen Türkontaktschalter, einen Empfänger eines schlüssellosen Schließsystems (Keyless-Go-System) oder einer Zentralverriegelung, oder durch einen Gurtkontaktschalter können am Kraftfahrzeug vorhandene Sensoren genutzt werden, um bereits vor dem Start des Verbrennungsmotors das erste Steuersignal auszulösen und mit der elektrischen Beheizung der Lambdasonde zu beginnen. Alternativ kann das erste Steuersignal von einem Ladezustandssensor eines Batteriesystems erzeugt werden.

In einem Hybridfahrzeug (beispielsweise PHEV - plug-In hybrid electric vehicle) kann mit dem Vorheizen gemäß dem ersten Schritt des erfindungsgemäßen Verfahrens begonnen werden, wenn der Ladezustand (*State of Charge* - SOC) eines den Elektromotor antreibenden Batteriesystems unter einen bestimmten Grenzwert fällt und ein Start des Verbrennungsmotors somit kurz bevorsteht. Ebenfalls bevorzugt kann das erste Steuersignal anhand von Navigationsdaten erzeugt werden, beispielsweise durch Korrelation einer Durchschnittsreichweite des PHEV im elektrischen Modus mit einer in diesem Modus bereits zurückgelegten Entfernung. Alternativ kann, insbesondere in einem autonomen Fahrmodus sowie im elektrischen Betrieb, Prädiktion zum Erzeugen des ersten Steuersignals genutzt werden. Insbesondere in den letztgenannten Fällen kann das erste Steuersignal in dem Steuergerät selbst erzeugt werden, wobei das Steuergerät eine Mehrzahl von Funktionsmodulen aufweisen und/oder mehrere Einzelsteuergeräte umfassen kann.

Gegenstand der Erfindung ist ferner ein Kraftfahrzeug mit einem Verbrennungsmotor und einem daran angeschlossenen Abgassystem, wobei letzteres eine elektrisch beheizbare Lambdasonde und einen Katalysator mit Sauerstoffspeicher aufweist. Das Kraftfahrzeug weist darüber hinaus ein Steuergerät auf, das zum Durchführen des erfindungsgemäßen Verfahrens, wie vorstehend beschrieben, eingerichtet ist. Bevorzugt weist das Kraftfahrzeug einen durch ein Batteriesystem gespeisten elektrischen Antriebsmotor auf, wobei das Batteriesystem einen zum Ausgeben des ersten Steuersignals eingerichteten Ladezustandssensor aufweist.

Das Batteriesystem dient zudem bevorzugt als Energiequelle für das elektrische Beheizen der Lambdasonde und/oder des elektrisch beheizbaren Katalysators. Insbesondere für das elektrische Beheizen der Lambdasonde ist bevorzugt ein Spannungswandler zwischen dem Batteriesystem und dem Heizelement zum Beheizen der Lambdasonde angeordnet. In einer alternativen Ausführungsform handelt es sich bei dem Batteriesystem um ein Hochvolt-Batteriesystem, mit einer Systemspannung von beispielsweise 48 V, und für das elektrische Beheizen der Lambdasonde und/oder des elektrisch beheizbaren Katalysators ist ferner ein Bordnetz mit Energiespeicher, beispielsweise ein 12 V-Bordnetz vorgesehen.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine bevorzugte Ausführungsvariante eines Antriebssystems eines erfindungsgemäßen Kraftfahrzeugs,
- Figur 2: eine weitere Ansicht eines erfindungsgemäßen Kraftfahrzeugs,
- Figur 3: ein Ablaufdiagramm eines erfindungsgemäßen Verfahrens zur Inbetriebnahme eines Verbrennungsmotors, den Verlauf eines Solllambdawerts während des erfindungsgemäßen Verfahrens zur Inbetriebnahme eines Verbrennungsmotors und den Temperaturverlauf an der Lambdasonde und dem Katalysator während des erfindungsgemäßen Verfahrens zur Inbetriebnahme eines Verbrennungsmotors, und
- Figur 4: eine alternative Ausführungsform eines Antriebssystems eines erfindungsgemäßen Kraftfahrzeugs.

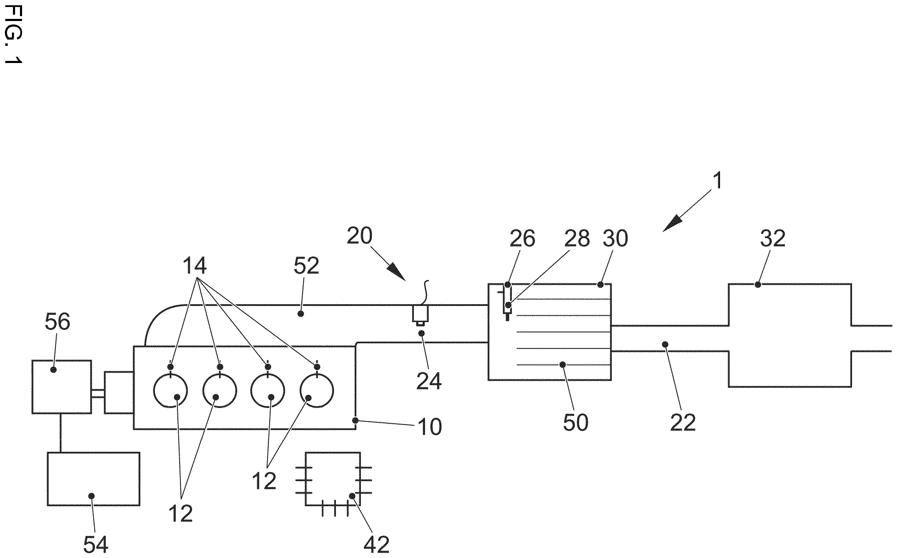

Figur 1 zeigt ein erstes Ausführungsbeispiel eines erfindungsgemäßen Kraftfahrzeugs 1 mit einem Verbrennungsmotor 10 und einem Abgassystem 20. Das erfindungsgemäße Kraftfahrzeug 1 ist vorzugsweise als Hybridfahrzeug mit einem Verbrennungsmotor 10 und einem Elektromotor 56, besonders bevorzugt mit einem durch Zündkerzen 14 fremdgezündeten Ottomotor, ausgebildet.

Der Verbrennungsmotor 10 weist mindestens einen Brennraum 12, vorzugsweise wie in Figur 1 dargestellt vier Brennräume 12 auf, welche über einen gemeinsamen Auslass 52 mit einem Abgaskanal 22 des Abgassystems 20 verbunden sind. Der Verbrennungsmotor 10 ist vorzugsweise als Hubkolbenmotor ausgebildet, kann aber auch als Rotationskolbenmotor ausgebildet sein. Der Verbrennungsmotor 10 ist vorzugsweise als mittels eines Abgasturboladers aufgeladener Verbrennungsmotor 10 oder als Saugmotor ausgebildet.

Das Abgassystem 20 weist in Abgaskanal 22 eine elektrisch beheizbare Lambdasonde 24 auf. Stromabwärts der Lambdasonde 24 ist im Abgaskanal 22 ein elektrisch beheizbarer Katalysator 30 mit einem Temperatursensor 26, einem elektrischen Heizelement 28 und einem Sauerstoffspeicher (Oxygen Storage Capacity - SOC) 50 angeordnet. Der elektrisch beheizbare Katalysator 30 ist vorzugsweise als elektrisch leitender Vier-Wege-Katalysator 30 mit integriertem Partikelfilter ausgebildet, wobei der Katalysator 30 beim Anlegen einer elektrischen Spannung selbst als Heizwiderstand 28 wirkt. Stromabwärts des elektrisch beheizbaren Katalysators 30 ist im Abgaskanal 22 ein weiterer Katalysator 32, vorzugsweise ein Drei-Wege-Katalysator, angeordnet.

Die elektrisch beheizbare Lambdasonde 24, der Temperatursensor 26 und das elektrische Heizelement 28 des elektrisch beheizbaren Katalysators sind über ein Steuergerät 42, vorzugsweise über das Motorsteuergerät des Verbrennungsmotors 10 oder ein Leistungssteuergerät des Hybridfahrzeugs, ansteuerbar. Das Steuergerät 42 ist insbesondere dazu ausgebildet, die Temperatur der elektrisch beheizbaren Lambdasonde 24 einzustellen. Vorzugsweise kann das Steuergerät die Temperatur der Lambdasonde 24 unabhängig von einem Messbetrieb der Lambdasonde 24 über ein in der Lambdasonde 24 integriertes elektrisches Heizelement einstellen, insbesondere vor dem Beginn des Messbetriebs der Lambdasonde 24.

Der elektrische Antriebsmotor 56 des Hybridfahrzeugs wird über eine Batterie 54 mit Spannung versorgt, welche, gegebenenfalls unter Verwendung eines Spannungswandlers, auch zum Aufheizen des elektrischen Heizelements 28 des Katalysators und/oder zum Aufheizen der Lambdasonde 24 genutzt werden kann.

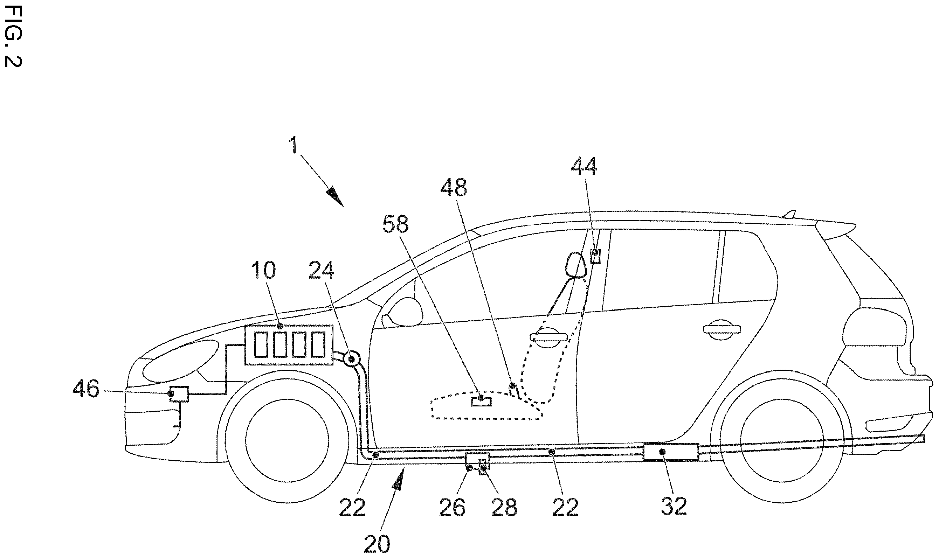

In Figur 2 ist eine weitere Darstellung eines erfindungsgemäßen Kraftfahrzeugs 1 gezeigt. Das Kraftfahrzeug 1 weist einen Verbrennungsmotor 10 mit einem Abgassystem 20 auf. In dem Abgassystem 20 sind in Strömungsrichtung eines Abgases des Verbrennungsmotors 10 durch den Abgaskanal 22 eine elektrisch beheizbare Lambdasonde 24, ein elektrisch beheizbarer Katalysator 30 mit Temperatursensor 26 und elektrischen Heizelement 28 sowie stromabwärts des elektrisch beheizbaren Katalysators 30 ein zweiter Katalysator 32, welcher als Drei-Wege-Katalysator ausgebildet ist, angeordnet.

Das Kraftfahrzeug 1 weist eine Mehrzahl von Sensoren 44, 46, 48 auf, welche dazu ausgebildet sind, ein erstes Steuersignal an ein Steuergerät 42 des Kraftfahrzeugs 1 zu senden. In Figur 2 sind beispielhaft ein Türkontaktschalter 44, ein Empfänger für ein schlüsselloses Schließsystem des Kraftfahrzeugs 46 und ein Gurtschlosssensor 48 dargestellt. Alternativ oder zusätzlich können jedoch auch noch weitere Sensoren, beispielsweise ein Empfänger für den Sender einer Zentralverriegelung, ein Sensor 58 zur Erkennung einer Sitzbelegung eines Sitzes, oder ein Ladezustandssensor des Batteriesystems 56 vorgesehen sein.

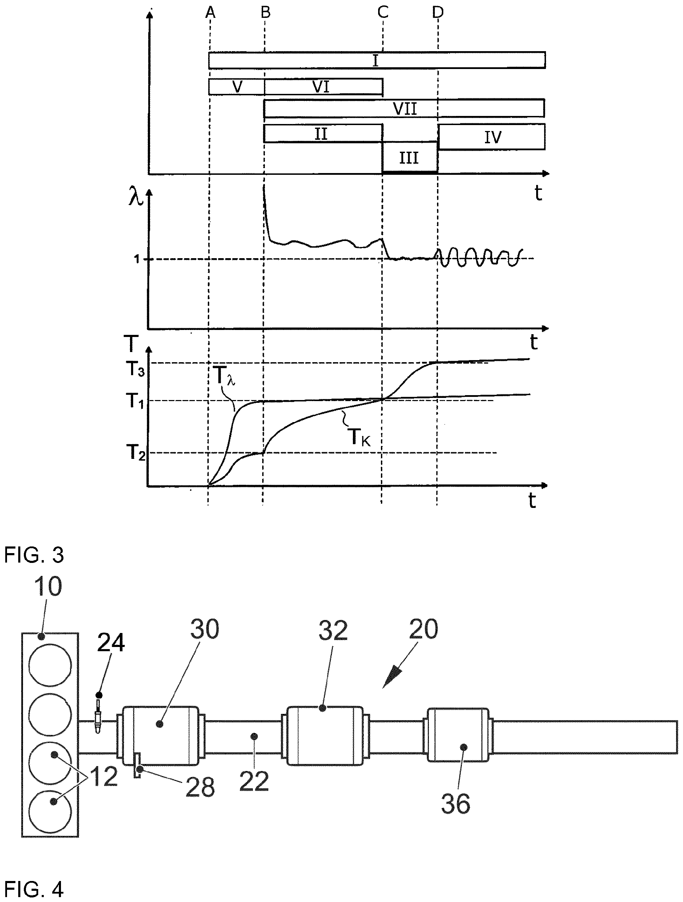

Der Ablauf eines erfindungsgemäßen Verfahrens zur Inbetriebnahme eines Verbrennungsmotors 10 lässt sich wie in Figur 3 dargestellt folgendermaßen beschreiben.

Zu einem Zeitpunkt A erhält das Steuergerät 42 ein erstes Steuersignal, das indiziert, dass ein Motorstart des Verbrennungsmotors 10 bevorsteht. Das erste Steuersignal kann beispielsweise von einem der in Figur 2 dargestellten Sensoren 44, 46 oder 48, 58 erzeugt worden sein. Als Reaktion auf das erste Steuersignal steuert das Steuergerät 42 ein in der beheizbaren Lambdasonde 24 integriertes elektrisches Heizelement derart an, dass dieses die Lambdasonde 24 aufheizt. Indem das elektrische Beheizen, Phase I, durch das erste Steuersignal eines der Sensoren 44, 46, 48, 58, insbesondere durch den Türkontaktschalter 44, aktiviert wird, erfolgt das Beheizen der Lambdasonde 24 deutlich vor dem Motorstart des Verbrennungsmotors 10. Im Ergebnis wird die Lambdasonde in einer ersten Phase bis zum Zeitpunkt B bis auf ihre Betriebstemperatur T₁ aufgeheizt, so dass für den gesamten Zeitraum VII die Regelbereitschaft der Lambdasonde 24 gegeben ist.

In Folge des Empfangs des ersten Steuersignals zum Zeitpunkt A regelt das Steuergerät 42 ferner das elektrische Heizelement 28 des Katalysators 30 derart an, dass dieser in der ersten Phase bis zum Zeitpunkt A rein elektrisch auf eine Temperatur T₂ aufgeheizt wird. Dabei liegt die Temperatur T₂ unter der Light-Off-Temperatur des Katalysators 30 aber ermöglicht dennoch ein exothermes Umsetzen von Kraftstoff und Sauerstoff auf der katalytischen Oberfläche des Katalysators in begrenztem Maß. Die Light-off-Temperatur ist dabei die Temperatur, bei der der Katalysator 50% der in den Katalysator eintretenden Abgasbestandteile konvertiert. Bevorzugt ermöglicht der Katalysator 30 oberhalb der Temperatur T₂ ein Konvertieren von 15%, ferner bevorzugt von 25% und besonders bevorzugt von 35% der in den Katalysator eintretenden Abgasbestandteile. Der Katalysator hat somit zum Zeitpunkt B noch nicht seine volle Betriebsbereitschaft zum Umsetzen von HC-, CO- und NOₓ-Emissionen erreicht.

Das Beheizen der elektrischen beheizbaren Lambdasonde 24 erfolgt während der gesamten ersten Phase I ausschließlich mittels des darin integrierten elektrischen Heizelements. Der elektrisch beheizbare Katalysator 30 wird zumindest bis zum Zeitpunkt B mittels des integrierten Heizelements 28 beheizt, bevorzugt auch darüber hinaus und/oder während des gesamten Zeitraums I. Die Energie zum elektrische Beheizen der Lambdasonde 24 und des Katalysators 30 wird bevorzugt vom Batteriesystem 56 bereitgestellt, gegebenenfalls unter Verwendung eines Spannungswandlers. Alternativ erfolgt das elektrische Vorheizen in dem Zeitraum A bis B, während dem das Hybridfahrzeug ausschließlich durch den elektrischen Antriebsmotor 56 angetrieben wird und der Verbrennungsmotor 10 inaktiv ist.

Nachdem die Betriebstemperatur T₁ der Lambdasonde zum Zeitpunkt B erreicht ist, wird der Verbrennungsmotor 10 gestartet und in einer Phase II Lambda-geregelt in einem Magerbetrieb mit einem Solllambda λ>1 betrieben. Dabei wird eine mittels der betriebsbereiten Lambdasonde 24 exakt ermittelte Sauerstoffkonzentration des Abgases genutzt, um das Kraftstoff-Luftverhältnis in den Brennräumen 12 des Verbrennungsmotors 10 so einzustellen, dass das gewünschte Solllambda λ>1 mit der Sonde 24 gemessen wird. Insbesondere wird der Verbrennungsmotor 10 so betrieben, dass mit der Lambdasonde 24 stetig ein Solllambdawert von 1,1 ermittelt wird. Dieser leichte Magerbetrieb bewirkt, dass die HC- und CO-Rohemissionen der Verbrennungsabgase reduziert werden. Somit wird trotz der noch nicht vollständig hergestellten Betriebsbereitschaft des Katalysators 30 eine hinreichende Abgasqualität erreicht.

Während des Magerbetriebs in Phase II steigt die Temperatur des Katalysators 30 aufgrund eines Wärmeübergangs vom Verbrennungsabgas des Verbrennungsmotor 10 auf den Katalysator 30 sowie gegebenenfalls aufgrund fortgesetzten elektrischen Zuheizens auf eine erste Betriebstemperatur, insbesondere eine Light-Off Temperatur, des Katalysators 30 an. Die erste Betriebstemperatur des Katalysators 30 ist in Figur 3 aus Gründen der Übersichtlichkeit als identisch mit der Betriebstemperatur T₁ der Lambdasonde dargestellt. In der Realität können diese Temperaturen jedoch voneinander abweichen.

Nachdem die erste Betriebstemperatur des Katalysators 30 zum Zeitpunkt C erreicht ist, wird der Verbrennungsmotor 10 in einer Phase III Lambda-geregelt stöchiometrisch betrieben. Insbesondere wird der Verbrennungsmotor 10 mit einem stetigen Solllambda λ=1 betrieben. Bei dieser Temperatur erfolgt die optimale Konvertierung der Abgasrohemissionen in unschädlichere Verbindungen im Katalysator 30.

Zusätzlich erfolgt in Phase III ein weiteres Aufheizen des Katalysators 30, unter anderem aufgrund des Wärmeübergangs vom Verbrennungsabgas des Verbrennungsmotor 10 auf den Katalysator 30. In der Realität kann der Temperaturanstieg des Katalysators 30 in Phase III geringer sein, als der Temperaturanstieg des Katalysators 30 in Phase II oder identisch zu diesem. In diesem Fall ist der in Figur 3 dargestellte Zeitraum C bis D (Phase III) länger als der Zeitraum B bis C (Phase II). In jedem Fall steigt die Temperatur des Katalysators 30 bis zum Ende der Phase III zum Zeitpunkt D auf eine zweite Betriebstemperatur T₃ an. Bei der zweiten Betriebstemperatur T₃ handelt es sich um eine Aktivierungstemperatur des Sauerstoffspeichers 50, der oberhalb dieser Temperatur in der Lage ist, Sauerstoff mit hoher Effizienz in sein Gefüge ein- und wieder daraus auszubauen. Die Rate der Sauerstoffaufnahme und -abgabe hängt dabei von der Sauerstoffbeladung des Sauerstoffspeichers 50 sowie von dem Sauerstoffpartialdruck des in den Katalysator 30 geleiteten Abgases ab.

Nachdem die zweite Betriebstemperatur T₃ des Katalysators 30 zum Zeitpunkt D erreicht ist, wird der Verbrennungsmotor 10 in einer Phase IV Lambda-geregelt stöchiometrisch mit oszillierendem Solllambdawert betrieben. Das Solllambda λ=1 wird somit nicht stetig eingeregelt, sondern mit einer Zwangsamplitude von beispielsweise +/- 2 % beaufschlagt. Dieser alternierende Betrieb des Verbrennungsmotors 10 mit abwechselnd leicht fettem und leicht magerem Gemisch führt zu einer optimalen Ausnutzung des Sauerstoffspeichers 50, der insbesondere bei Lastwechseln die Abgasqualität sicherstellt und den Lambda-geregelten stöchiometrischen Betrieb dämpft.

In einer bevorzugten Ausführungsform des erfindungsgemäßen Verfahrens zur Inbetriebnahme des Verbrennungsmotors 10 wird der Verbrennungsmotors 10 zumindest während einer Phase VII, die sich vom Starten des Motors 10 zum Zeitpunkt B zumindest bis zum Erreichen der zweiten Betriebstemperatur T₃ des Katalysators 30 zum Zeitpunkt C (dargestellt durch gestrichelte Linie in der Figur 3), alternativ auch bis zum Zeitpunkt D, erstreckt, mit erhöhter Zündenergie betrieben. Ebenfalls bevorzugt erstreckt sich der Betrieb mit erhöhter Zündenergie bis in Phase IV hinein. Die Zündenergie wird jedoch spätestens im Normalbetrieb des Verbrennungsmotors 10, welcher in der in Figur 3 gezeigten Phase IV beginnt oder sich an diese anschließt, auf ein normales Niveau eingestellt. Insbesondere erfolgt der Betrieb mit erhöhter Zündenergie durch den Einsatz von Funkenbandzündungen, zumindest während der Phasen II, III und zumindest teilweise auch während Phase IV. Die erhöhte Zündenergie ermöglicht einen laufruhigen und gleichmäßigen Betrieb des Verbrennungsmotors 10 mit verminderten Rohemissionsschwankungen und somit verbesserter Abgasqualität.

Die Kombination der in Figur 3 dargestellten und obenstehend erläuterten Maßnahmen stellt ein Verfahren zur Inbetriebnahme eines Verbrennungsmotors 10 mit optimaler Rohemissionsminderung direkt nach dem Kaltstart und einer optimalen Schadstoffkonvertierung in der Warmlaufphase zur Verfügung. Dies wird erreicht, indem die Regelbarkeit der Lambdasonde 24 bereits zum Motorstart vollständig gegeben ist und somit der Lambdageregelte Betrieb in den Phasen II, III und IV mit vorteilhaft erhöhter Präzision erfolgt. Bevorzugt wird die Abgaskonvertierung weiter verbessert, indem auch die Temperatur des elektrisch beheizbaren Katalysators 30 bereits beim Motorstart zum Zeitpunkt B oberhalb einer ersten Schwellentemperatur T₂ liegt. Oberhalb dieser Temperatur ist der Katalysator zumindest in begrenztem Maß zum Konvertieren der in den Katalysator eintretenden Abgasbestandteile in der Lage.

Die Figur 4 zeigt eine alternative Ausführungsform des in Figur 1 dargestellten Kraftfahrzeugs 1. Dabei sind bei im Wesentlichen gleichem Aufbau lediglich der Verbrennungsmotor 10 und das Abgassystem 20 des Verbrennungsmotors 10 dargestellt.

Bei der in Figur 4 dargestellten Ausführungsform ist bei ansonsten gleichem Aufbau wie in Figur 1 im Abgassystem 20 ein Drei-Wege-Katalysator (TWC) 30 anstelle des elektrisch beheizbaren Vier-Wege-Katalysators angeordnet und ist stromabwärts von diesem TWC 30 und des zweiten Katalysators 32 zusätzlich ein Partikelfilter 36 angeordnet. Alternativ kann ein zusätzlicher Partikelfilter 36 auch stromaufwärts des zweiten Katalysators 32 angeordnet sein. Alternativ kann auch die Funktionalität des zweiten Drei-Wege-Katalysators 32 und des Partikelfilters 36 in einem Bauteil zusammengefasst werden und ein Vier-Wege-Katalysator 32 im Abgaskanal 22 stromabwärts eines elektrisch beheizbaren Drei-Wege-Katalysators 30 angeordnet sein.

In einer ebenfalls bevorzugten Ausgestaltung des Abgassystems 20 ist die beheizbare Lambdasonde 24 stromaufwärts eines bevorzugt beheizbar ausgeführten Drei-Wege-Katalysators 32 und eines Partikelfilters 36 angeordnet, wobei ebenfalls auf einen Vier-Wege-Katalysator 30 verzichtet wird. Alternativ kann die beheizbare Lambdasonde 24 auch in Kombination mit lediglich einem einzelnen beheizbaren oder nicht-beheizbaren Drei-Wege-Katalysator oder einem einzelnen beheizbaren oder nicht-beheizbaren Vier-Wege-Katalysator in einem Abgassystem 20 angeordnet sein. Ebenfalls bevorzugt sind zwei beheizbare oder nicht-beheizbare Drei-Wege-Katalysatoren stromabwärts der beheizbaren Lambdasonde 24 angeordnet. Eine ebenfalls bevorzugte Ausgestaltung des Abgassystems 20 entspricht der in Figur 1 dargestellten Ausgestaltung, wobei die Reihenfolge der Anordnung von Drei-Wege-Katalysator 32 und Vier-Wege-Katalysator 30 im Abgasstrang 22 miteinander vertauscht sind.

### Bezugszeichenliste

- 1: Kraftfahrzeug
- 10: Verbrennungsmotor
- 12: Brennraum
- 14: Zündkerze
- 20: Abgassystem
- 22: Abgaskanal
- 24: elektrisch beheizbare Lambdasonde
- 26: Temperatursensor
- 28: elektrisches Heizelement
- 30: elektrisch beheizbarer Katalysator
- 32: zweiter Katalysator
- 36: Partikelfilter
- 42: Steuergerät
- 44: Türkontaktschalter
- 46: Empfänger
- 48: Gurtschlosssensor
- 50: Sauerstoffspeicher (OSC)
- 52: Auslass
- 54: Batterie
- 56: elektrischer Antriebsmotor
- 58: Sensor zur Erkennung der Sitzplatzbelegung
- λ: Solllambda
- Tλ: Temperatur der Lambdasonde
- T_{K}: Temperatur des Katalysators
- T₁: Betriebstemperatur der Lambdasonde / erste Betriebstemperatur des Katalysator
- T₂: Schwellentemperatur des Katalysators
- T₃: zweite Betriebstemperatur des Katalysator

## Patentansprüche

1. Verfahren zur Inbetriebnahme eines Verbrennungsmotors (10) mit einem daran angeschlossenen Abgassystem (20), aufweisend eine elektrisch beheizbare Lambdasonde (24) und einen Katalysator (30) mit Sauerstoffspeicher (50), und einem Steuergerät (42), das Verfahren aufweisend die Schritte:
- Elektrisches Aufheizen der Lambdasonde (24) bei ausgeschaltetem Verbrennungsmotor (10) nach dem Empfang eines ersten Steuersignals durch das Steuergerät (42),
- Starten des Verbrennungsmotors (10) nach dem Erreichen einer Betriebstemperatur der Lambdasonde (24) und Lambda-geregelter Magerbetrieb des Verbrennungsmotors (10),
- Lambda-geregelter stöchiometrischer Betrieb des Verbrennungsmotors (10) nach dem Erreichen einer ersten Betriebstemperatur des Katalysators (30), und
- Lambda-geregelter stöchiometrischer Betrieb des Verbrennungsmotors (10) mit oszillierendem Solllambdawert nach dem Erreichen einer zweiten Betriebstemperatur des Katalysators (30).

2. Verfahren nach Anspruch 1, wobei die erste Betriebstemperatur des Katalysators (30) eine Light-Off-Temperatur des Katalysators (30) ist und die zweite Betriebstemperatur des Katalysators (30) eine Aktivierungstemperatur des Sauerstoffspeichers (50) ist.

3. Verfahren nach Anspruch 1 oder 2, wobei im Lambda-geregelten Magerbetrieb des Verbrennungsmotors (10) ein Solllambdawert zwischen 1,05 und 1,15 beträgt.

4. Verfahren nach einem der vorangehenden Ansprüche, wobei der Solllambdawert nach dem Erreichen der zweiten Betriebstemperatur zwischen 0,98 und 1,02 alterniert.

5. Verfahren nach einem der vorangehenden Ansprüche, wobei der Verbrennungsmotor (10) bis zum Erreichen der ersten Betriebstemperatur des Katalysators (30) mit erhöhter Zündenergie im Magerbetrieb betrieben wird.

6. Verfahren nach einem der vorangehenden Ansprüche, wobei der Katalysator (30) ferner ein elektrisches Heizelement (28) aufweist und der Katalysator (30) nach dem Empfang des ersten Steuersignals elektrisch aufgeheizt wird.

7. Verfahren nach einem der vorangehenden Ansprüche, wobei das Erreichen der ersten Betriebstemperatur des Katalysators (30) und/oder der zweiten Betriebstemperatur des Katalysators (30) anhand einer im oder am Katalysator (30) mittels eines Temperatursensors (26) gemessenen Temperatur oder anhand eines Abgastemperaturmodells ermittelt wird.

8. Verfahren nach einem der vorangehenden Ansprüche, wobei das erste Steuersignal von einem Türkontaktschalter (44), einem Empfänger (46) für ein Signal eines schlüssellosen Schließsystems oder einer Zentralverriegelung, einem Gurtschlosskontakt (48), oder einem Ladezustandssensors eines Batteriesystems (54) erzeugt wird.

9. Kraftfahrzeug (1) mit einem Verbrennungsmotor (10), einem daran angeschlossenen Abgassystem (20), aufweisend eine elektrisch beheizbare Lambdasonde (24) und einen Katalysator (30) mit Sauerstoffspeicher (50), und einem Steuergerät (42), wobei das Steuergerät (42) dazu eingerichtet ist, ein Verfahren nach einem der Ansprüche 1 bis 8 durchzuführen.

10. Kraftfahrzeug (1) nach Anspruch 9, ferner aufweisend einen durch ein Batteriesystem (54) gespeisten elektrischen Antriebsmotor (56), wobei das Batteriesystem (54) einen zum Ausgeben des ersten Steuersignals eingerichteten Ladezustandssensor aufweist.

## Claims

1. Method for commissioning an internal combustion engine (10) having an exhaust system (20) connected thereto, comprising an electrically heatable lambda probe (24) and a catalytic converter (30) with oxygen store (50), and having a control device (42), the method having the steps of:
- electrically heating the lambda probe (24) while the internal combustion engine (10) is switched off, after the control device (42) has received a first control signal,
- starting up the internal combustion engine (10) after reaching an operating temperature of the lambda probe (24), and lambda-regulated lean operation of the internal combustion engine (10),
- lambda-regulated stoichiometric operation of the internal combustion engine (10) after reaching a first operating temperature of the catalytic converter (30), and
- lambda-regulated stoichiometric operation of the internal combustion engine (10) with oscillating target lambda value after reaching a second operating temperature of the catalytic converter (30).

2. Method according to claim 1, wherein the first operating temperature of the catalytic converter (30) is a light-off temperature of the catalytic converter (30), and the second operating temperature of the catalytic converter (30) is an activation temperature of the oxygen store (50).

3. Method according to either claim 1 or claim 2, wherein a target lambda value is between 1.05 and 1.15 in lambda-regulated lean operation of the internal combustion engine (10).

4. Method according to any one of the preceding claims, wherein the target lambda value alternates between 0.98 and 1.02 after reaching the second operating temperature.

5. Method according to any one of the preceding claims, wherein the internal combustion engine (10) is operated in lean mode with increased ignition energy until the first operating temperature of the catalytic converter (30) is reached.

6. Method according to any one of the preceding claims, wherein the catalytic converter (30) further comprises an electrical heating element (28), and the catalytic converter (30) is electrically heated after the first control signal is received.

7. Method according to any one of the preceding claims, wherein it is determined that the first operating temperature of the catalytic converter (30) and/or the second operating temperature of the catalytic converter (30) has been reached using a temperature measured in or on the catalytic converter (30) by means of a temperature sensor (26), or using an exhaust gas temperature model.

8. Method according to any preceding claim, wherein the first control signal is generated by a door contact switch (44), a receiver (46) for a signal of a keyless locking system or a central lock, a seatbelt buckle contact (48), or a charge state sensor of a battery system (54).

9. Motor vehicle (1) having an internal combustion engine (10), an exhaust system (20) connected thereto, comprising an electrically heatable lambda probe (24) and a catalytic converter (30) with oxygen store (50), and a control device (42), wherein the control device (42) is configured to implement a method according to any of the claims 1 to 8.

10. Motor vehicle (1) according to claim 9, further comprising an electric drive motor (56) supplied by a battery system (54), wherein the battery system (54) comprises a charge state sensor configured to output the first control signal.

## Revendications

1. Procédé pour faire fonctionner un moteur à combustion interne (10) qui comporte un système de gaz d'échappement (20) qui lui est raccordé, présentant une sonde lambda (24) à chauffage électrique et un catalyseur (30) équipé d'un accumulateur d'oxygène (50), ainsi qu'un appareil de commande (42), le procédé présentant les étapes de :
- chauffage électrique de la sonde lambda (24) lorsque le moteur à combustion interne (10) est éteint, après réception d'un premier signal de commande par le biais de l'appareil de commande (42),
- démarrage du moteur à combustion interne (10) après avoir atteint une température de fonctionnement de la sonde lambda (24) et un fonctionnement en mode pauvre à régulation lambda du moteur à combustion interne (10),
- fonctionnement stœchiométrique à régulation lambda du moteur à combustion interne (10) après avoir atteint une première température de fonctionnement du catalyseur (30) et
- fonctionnement stœchiométrique à régulation lambda du moteur à combustion interne (10) avec une valeur lambda de consigne oscillante après avoir atteint une deuxième température de fonctionnement du catalyseur (30).

2. Procédé selon la revendication 1, dans lequel la première température de fonctionnement du catalyseur (30) est une température de réchauffage du catalyseur (30) et la deuxième température de fonctionnement du catalyseur (30) est une température d'activation de l'accumulateur d'oxygène (50).

3. Procédé selon la revendication 1 ou 2, dans lequel en fonctionnement en mode pauvre à régulation lambda du moteur à combustion interne (10) une valeur lambda de consigne est comprise entre 1,05 et 1,15.

4. Procédé selon l'une quelconque des revendications précédentes, dans lequel la valeur lambda de consigne alterne entre 0,98 et 1,02 après avoir atteint la deuxième température de fonctionnement.

5. Procédé selon l'une quelconque des revendications précédentes, dans lequel le moteur à combustion interne (10) est actionné avec une énergie d'allumage accrue en fonctionnement en mode pauvre jusqu'à atteindre la première température de fonctionnement du catalyseur (30).

6. Procédé selon l'une quelconque des revendications précédentes, dans lequel le catalyseur (30) comporte en outre un élément chauffant électrique (28) et le catalyseur (30) est chauffé électriquement après réception du premier signal de commande.

7. Procédé selon l'une quelconque des revendications précédentes, dans lequel l'atteinte de la première température de fonctionnement du catalyseur (30) et/ou la deuxième température de fonctionnement du catalyseur (30) est déterminée à l'aide d'une température mesurée dans ou au niveau du catalyseur (30) au moyen d'un capteur de température (26) ou à l'aide d'un modèle de température de gaz d'échappement.

8. Procédé selon l'une quelconque des revendications précédentes, dans lequel le premier signal de commande est généré par un contacteur de porte (44), un récepteur (46) pour un signal d'un système de fermeture sans clé ou d'un verrouillage centralisé, un contacteur de ceinture (48) ou un capteur d'état de charge d'un système de batterie (54).

9. Véhicule automobile (1) comprenant un moteur à combustion interne (10), un système de gaz d'échappement (20) qui lui est raccordé, présentant une sonde lambda (24) à chauffage électrique et un catalyseur (30) comportant un accumulateur d'oxygène (50) et un appareil de commande (42), l'appareil de commande (42) étant conçu pour exécuter un procédé selon l'une quelconque des revendications 1 à 8.

10. Véhicule automobile (1) selon la revendication 9, comportant en outre un moteur de propulsion (56) alimenté électriquement par un système de batterie (54), le système de batterie (54) présentant un capteur d'état de charge destiné à émettre le premier signal de commande.
